# EUROPEAN PATENT APPLICATION

(11) **EP 1 483 998 A1**
(43) Date of publication of application: **08.12.2004**
(21) Application number: 04013118.7
(22) Date of filing: 03.06.2004
(51) Int. Cl.: A47J 43/10, A47J 43/044

(54) **Mechanic electrical system for preparation of real cappuccino cup**

(30) Priority: 05.06.2003 LB 674003
(71) Applicant: Al-Najjar, George Michel, Beirut (LB)
(72) Inventor: Al-Najjar, George Michel, Beirut (LB)
(74) Representative: UEXKÜLL & STOLBERG

(57) **Abstract**

The invention relates to a cappuccino foamer for use with or incorporation into a coffee machine.

## Description

The invention relates to a cappuccino foamer.

The traditional way of producing cappuccino foam is to blow steam into a cup holding a small amount of milk and moving the cup up and down vis-à-vis the steam nozzle.

A disadvantage of this well known method is that it requires an operator for handling the cup of milk.

The problem of this invention is to provide for an apparatus for generating cappuccino foam which can be incorporated into a coffee machine and therefore does not require manual labour.

This problem is solved by a cappuccino foamer as claimed in claim 1.

With the present invention it is merely required to place a cup in the appropriate position and push a corresponding button, whereupon the mixer will be moved form a "washing position" to the "cappuccino cup" and after having generated a thick foamy top within the cappuccino cup it will be moved back to the "washing position".

### Brief description of the drawings

**Figure 1** shows a schematic front view of the cappuccino foamer.
**Figure 2** shows schematically the mixer of the cappuccino foamer according to the invention on its way from the washing position towards cappuccino cup.
**Figure 3** shows the mixer according to the invention within the cappuccino cup and ready for generating foam.
**Figure 4** is a view similar to Fig. 2 with the mixer moving towards the washing position.
**Figure 5** shows a side view of the apparatus according to the invention.
**Figure 6** the interior of the housing of the cappuccino foamer.

### Detailed description of the drawings

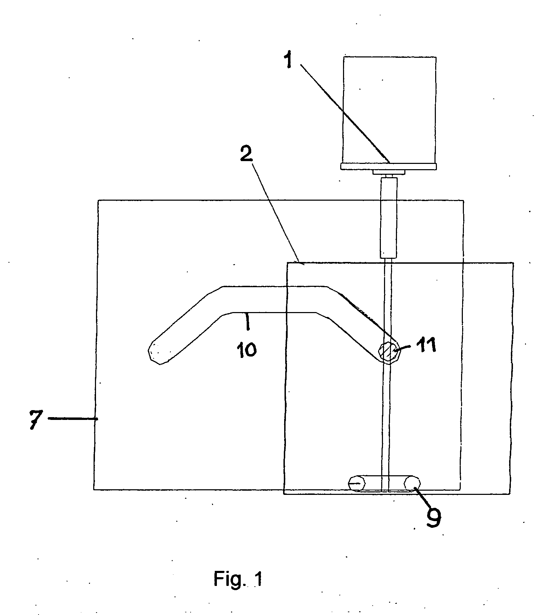

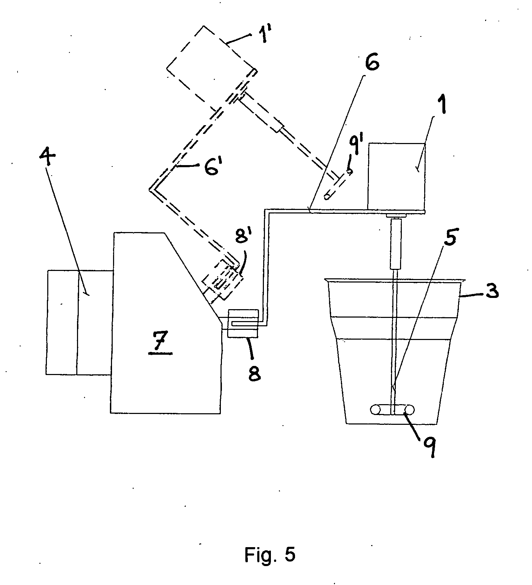

**Figure 1** shows the cappuccino foamer according to the invention schematically in front view. A housing 7 which can better seen in **Figure 5** carries a mixer 1 which is immersed into a washing container 2. The washing container 2 has an open top so that mixing head 9 of the mixer 1 can be inserted from above. Figure 5 shows the mixer 1 which comprises an electro motor carried by a mixer arm 6. In one embodiment the mixer arm 6 is made from a flat strip of metal, preferably aluminium or stainless steel, having a width which is large enough to support the electro motor. The mixer arm 6 is bent at 90° to extend down towards a coupling element 8. The vertical dimension of the mixer arm 6 is such that in its lowered position with vertically extending mixing rod 5 the mixing head 9 comes to rest within short distance form the bottom of a cappuccino cup 3 or from the bottom of the washing container 2. The expert reviewing Figure 5 will notice without problems that the mixing arm 6 can be pivoted upwardly so that the mixing head 9 is moved out of the cappuccino cup 3. The upper most elevated position is disclosed in Figure 5 in dashed lines as 1'. Figure 5 further shows schematically a gear-motor 4 which moves the mixer 1 from the washing position to the foaming position and back.

Reverting to **Figure 1,** the housing 7 or box is shown with a guide 10, said guide having a horizontal portion and two slanted parts which extend downwardly from the ends from the horizontal portion in a diverging manner, i.e. they extend downwardly and outwardly.

The guide 10 accommodates a roller 11 which is connected on the left side in Figure 5 to a disc 12 and on its right side to the coupling element 8. Thus, when the gear-motor 4 is activated, the roller 11 is moved upwardly and displaced horizontally towards position 11 ' in Figure 1 because it operates like a cam follower within the guide 10.

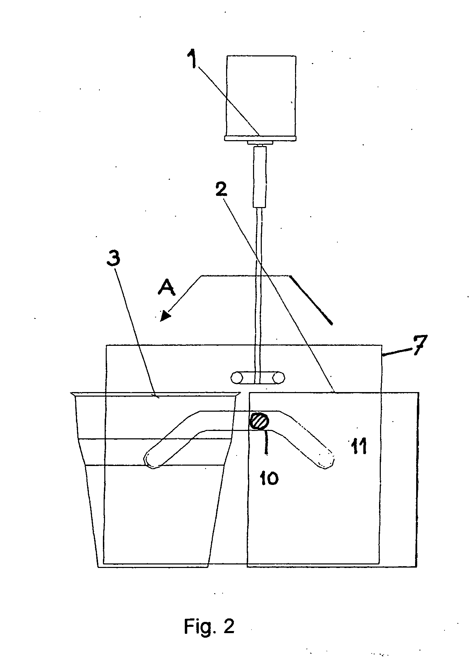

**Figure 2** is a similar view as in Figure 1 showing the housing 7 with the washing container 2 and a cappuccino cup 3 placed in front of the housing 7 and adjacent to each other. In Figure 2 the mixer 1 is shown in elevated position when moved in direction A from the washing container 2 to the cappuccino cup 3.

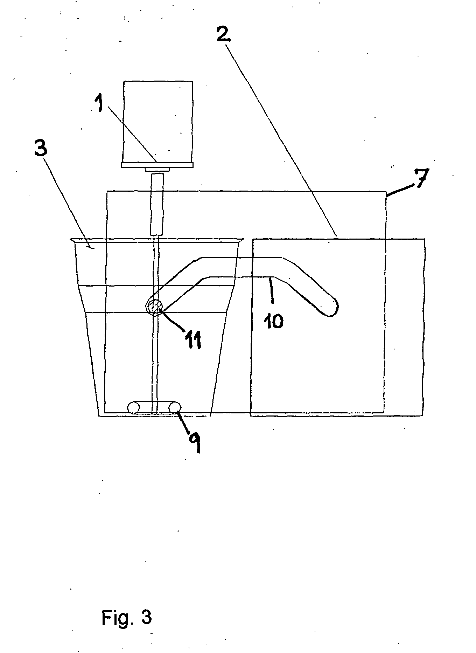

**Figure 3** shows the mixing head 9 of the mixer 1 fully moved down into the cappuccino cup 3 and ready for mixing milk within the cappuccino cup 3 to generate a thick foamy top.

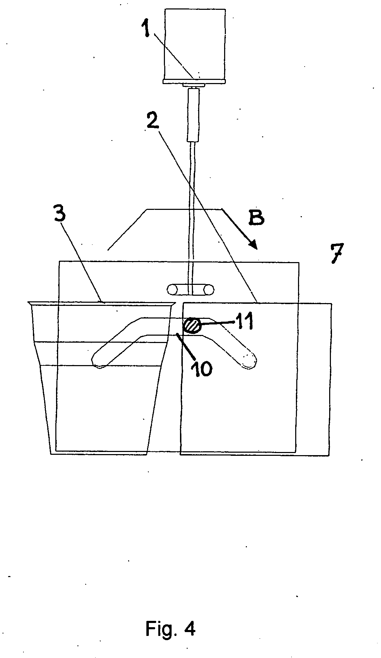

**Figure 4** is a view similar to Figure 2 with the mixer 1 returning from the cappuccino cup 3 to the washing container 2 as is indicated by arrow B.

**Figure 5** has been discussed already. However, it should be noted that the man skilled in the art knows how to design the gear-motor 4 such that the mixer arm 6 with the mixer 1 attached thereto is moved in direction of the arrows A and B as shown in Figures 2 and 4. Further, it should be noted that the electrical connections to the mixer motor 1 are not shown in the drawings. One way to provide the mixer motor 1 with electrical energy is to provide connector sleeves to the top of the mixer motor 1 and insert an electric cable via connector plugs. Preferably the electric cable will be attached to the mixer arm 6 so that it is moved together with the mixer arm 6.

The housing 7 or box of the cappuccino foamer according to the invention can be made of metal or plastic. One disc-cam coupled to the gear-motor performs the horizontal movement along a shaft which extends horizontally. One slot-cam is located on the front side of the box housing 7 and guides the mixing arm 6 to perform the vertical movement. Two micro-switches are used to locate the different positions of the mixing arm 6, one position being the washing position and other position being the cup position. The cappuccino foamer is specially designed to in a coffee machine and to be connected electrical to such machine. It is composed of two main parts:
- A housing equipped with a gear-motor 4 and two cam systems. The first cam provides the horizontal movement and the second cam provides the vertical movement. Two limit switches are used locate the different positions of the mixer 1.
- A mixing arm 6 connected to the above-mentioned box or housing 7 and equipped with a DC motor. The output shaft of said motor is connected to the rod 5 the end of which carrying the mixing head 9. The mixing head 9 consists of a loop surrounded by a spring. The whole system is made from stainless steel.

The cappuccino foamer operates only when a cup of cappuccino is selected from the machine. The process of preparation is performed as follows:
- The mixer 1 is immersed in the washing container 2.
- While dispensing the milk the mixing arm 6 moves up from the washing container 2 towards the cup 3.
- The mixing head 9 of the mixer 1 enters into the cup and starts mixing the milk for 8 seconds which is the time needed to get a thick foam on top of the milk.
- The mixing arm 6 moves up from the cup 3 towards the washing container 2. During this time instant coffee if dispensed over the milk.
- The mixing head 9 of the mixer 1 enters in the washing container 2 for cleaning.
- Within the washing container 2 the mixing head 9 is rotated for approximately 3 seconds within a cleaning liquid, preferably water.

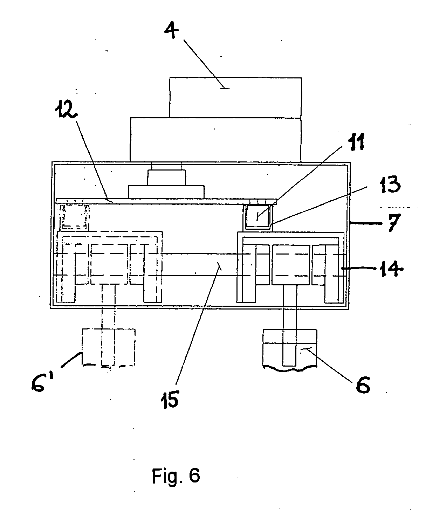

**Figure 6** shows a top view of the housing 7 of Figure 5 with the top wall removed so that the interior parts can be seen. A disc 12 is rotatably mounted to the gear-motor 4 and carries the roller 11 such that the axis of rotation of the roller 11 is parallel to the axis of rotation of the disc 12. The roller 11 engages a rail 13 which is attached to a bracket 14. The bracket 14 is mounted on a horizontal shaft 15 which pivots the mixing arm 6 upwardly or downwardly.

Another way of controlling the vertical and horizontal movement of the mixer 1 is by conventional cam and follower means wherein a disc carries a roller 11 which is moved within a guide 10. When the guide 10 has the shape of an arc, the bracket 14 carrying the mixing arm 6 will be transferred from the washing position to the foaming position. If the bracket 14 is mounted on a shaft 15, the bracket 14 can be rotated by any conventional means, for example through another guide or cam and follower mechanism.

## Claims

1. A cappuccino foamer comprising:
a mixer (1) including an electric mixer motor and a rod (5) extending therefrom and carrying a mixing head (9) at the end remote to the mixer motor,
**characterized by** :
a housing (7) including a gear-motor (4);
a disc (12) coupled to the gear-motor (4);
a roller (11 ) carried by the disk (12) and engaging a rail (13); engaging a rail (13);
a rail (13) fixedly attached to a bracket (14), said bracket (14) supporting a a coupling element (8) at its end remote to the gear-motor (4);
a mixing arm (6) carrying on one end the mixer motor (1) and connected with its other end to the coupling element (8).

2. Apparatus according to claim 1, wherein a shaft (15) slidingly extends through the bracket (14) and carries the coupling element (8) for pivoting movement of the mixer (1, 1').
